# EUROPEAN PATENT APPLICATION

(11) **EP 4 622 068 A1**
(43) Date of publication of application: **24.09.2025**
(21) Application number: 23891901.3
(22) Date of filing: 07.11.2023
(51) Int. Cl.: H02K 3/02, H02K 3/30, H02K 3/40, H02K 3/14, H02K 15/00

(54) **STATOR, AND MOTOR COMPRISING SAME**

(30) Priority: 16.11.2022 KR 20220153935
(71) Applicant: LG Magna e-Powertrain Co., Ltd., Seo-gu, Incheon 22744 (KR)
(72) Inventor: KIM, Seokhwan, Incheon 22744 (KR); LEE, Jiwon, Incheon 22744 (KR); YOO, Sehoon, Incheon 22744 (KR)
(74) Representative: Vossius & Partner Patentanwälte Rechtsanwälte mbB
(86) International application number: PCT/KR2023/017717
(87) International publication number: WO 2024/106834

(57) **Abstract**

A stator, and a motor comprising same, according to an aspect of the present disclosure, comprise: a core having a plurality of slots; and a plurality of coils wound around the plurality of slots, wherein at least two of the plurality of coils have at least one different specification.

## Description

### [Technical Field]

The present disclosure relates to a stator, and a motor including the stator.

### [Background Art]

A vehicle is an apparatus that moves in a direction desired by a user on board. A representative example of a vehicle may be an automobile. Meanwhile, an electric vehicle powered by electricity, a hybrid vehicle that combines an internal combustion engine with an electric drive system, and the like generate their output using a motor (electric motor) and a battery.

Such a motor typically includes a stator and a rotor disposed to be rotatable relative to the stator. The stator consists of a core having a plurality of slots, and a coil wound around the core via the plurality of slots.

In order to increase the efficiency of a motor and reduce Joule loss, a hairpin winding motor (hereinafter referred to as a "hairpin motor") is used to increase the space factor of a stator winding (a ratio of the area of a copper wire to the area within a slot). The hairpin motor uses a hairpin winding method that breaks away from the existing round winding method to reduce losses due to winding resistance.

Such a hairpin motor includes a core having a plurality of slots arranged in a circumferential direction, and a plurality of hairpins inserted into the plurality of slots. Each hairpin includes insertion portions inserted into different slots.

As for the hairpin winding method, a relatively thick copper wire with a rectangular cross-section is inserted into a slot. According to the hairpin winding method, there is no wasted (or dead) space between coils, thereby maximizing the space factor. As a result, an increase in output may be expected due to reduced resistance.

Meanwhile, a motor's coil specification is selected to satisfy the heat resistance class and insulation performance, and the selected coil specification is applied equally to all coils. An increase in applied voltage is required in order to achieve a lightweight and high-efficiency motor. This leads to an increase in thickness of coating material and the advancement of specification, causing an increase in the proportion of processing costs in the total winding price.

### [Disclosure]

### [Technical Problem]

It is an object of the present disclosure to provide a stator capable of improving insulation performance to thereby reduce weight and increase efficiency, and a motor including the same.

It is another object of the present disclosure to provide a stator capable of reducing manufacturing costs while satisfying heat resistance class, insulation performance, and the like in order to secure motor competitiveness, and a motor including the same.

The objects of the present disclosure are not limited to the objects described above, and other objects not stated herein will be clearly understood by those skilled in the art from the following description.

### [Technical Solution]

In accordance with an aspect of the present disclosure, a stator and a motor including the stator include: a core having a plurality of slots; and a plurality of coils wound on the plurality of slots, wherein at least two coils of the plurality of coils have at least one different specification.

The plurality of coils may include a first coil connected to a power supply line and a second coil connected to the first coil.

The first coil may have a lower dielectric constant than the second coil.

The first coil may include an anti-corona coating layer, and the second coil may not include an anti-corona coating layer.

The first coil may be made of a thicker polyetheretherketone (PEEK) material than the second coil.

The first coil may be a wire to which a PEEK extrusion specification is applied, and the second coil may be a wire to which a PEEK extrusion specification is not applied.

A hole may be formed through a central portion of the core along an axial direction, and the slot may be disposed on an outer circumference of the hole.

The power supply line may be connected to a coil located farthest from the hole.

Alternatively, the power supply line may be connected to a coil located farthest from the hole and a coil located closest to the hole.

The plurality of coils may be configured such that a dielectric constant increases with an increase in distance from a power supply line.

The plurality of coils may be configured such that a coating layer increases with a decrease in distance from a power supply line.

The plurality of coils may include a first turn connected to a power supply line, and second to n-th turns connected to the first turn.

A dielectric constant of the first turn may be lower than a dielectric constant of the n-th turn.

A dielectric constant may increase as a number of turns increases from the first turn to the n-th turn.

A dielectric constant of the first turn to an x-th turn may be lower than a dielectric constant of an (x+1)-th turn to the n-th turn.

A thickness of a coating layer of the first turn may be greater than a thickness of a coating layer of the n-th turn.

### [Advantageous Effects]

According to at least one of the embodiments of the present disclosure, it is possible to achieve a reduction in weight and high efficiency of a stator a motor including the same.

According to at least one of the embodiments of the present disclosure, it is possible to reduce manufacturing costs of a stator and a motor including the same while satisfying heat resistance class, insulation performance, and the like, thereby achieving motor competitiveness.

Other effects will be clearly understood by those skilled in the art from the appended claims.

### [Brief Description of Drawings]

FIG. 1 is a schematic diagram illustrating a body of a vehicle according to an embodiment of the present disclosure.
FIG. 2 is an assembled view of a stator according to an embodiment of the present disclosure.
FIG. 3 is an exploded perspective view of a stator according to an embodiment of the present disclosure.
FIG. 4 is a bottom view of a stator according to an embodiment of the present disclosure.
FIG. 5 is a top view of a stator according to an embodiment of the present disclosure.
FIG. 6 is a sectional view taken along line F-F of FIG. 5.
FIG. 7 is a diagram illustrating an example of a winding structure of a hairpin motor.
FIG. 8 is a diagram for explaining a winding structure of a hairpin motor according to an embodiment of the present disclosure.
FIG. 9 is a diagram for explaining a winding structure of a hairpin motor according to an embodiment of the present disclosure.
FIG. 10 is a diagram illustrating a pattern of a U-phase of a coil according to an embodiment of the present disclosure.

### [Mode for the Invention]

Description will now be given in detail according to exemplary embodiments disclosed herein, with reference to the accompanying drawings. However, the present disclosure is not limited to these embodiments and can be modified in various forms.

In the following description, terms such as "comprises or includes" or "has" are used herein and should be understood that they are intended to indicate an existence of features, numbers, steps, operations, elements, components, or combinations thereof, disclosed in the specification, but do not preclude the presence or addition of one or more other features, numbers, steps, operations, elements, components, or combinations thereof.

When an element is described as being "connected," "coupled," or "liked" to another element, the elements may be directly connected or linked to each other, but it should be understood that an intervening element(s) may be interposed therebetween or that the elements may be "connected," "coupled," or "linked" to each other via an intervening element.

Although the terms "first", "second", etc. may be used herein to describe various elements, these elements should not be limited by these terms. These terms are only used to distinguish one element from another.

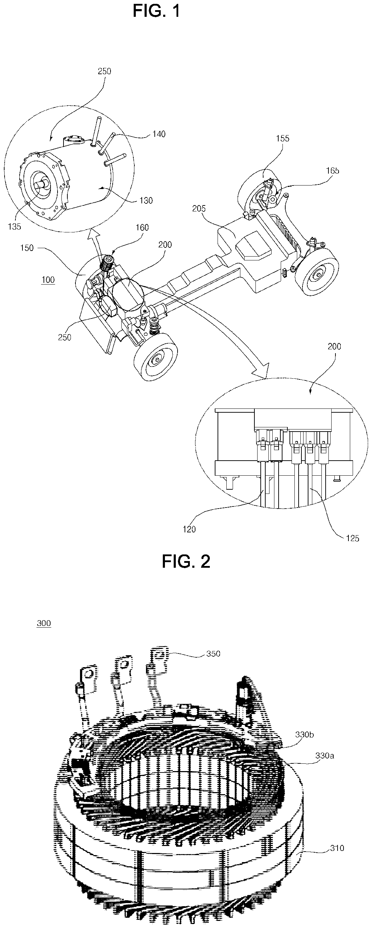

FIG. 1 a schematic diagram illustrating a body of a vehicle according to an embodiment of the present disclosure.

Referring to FIG. 1, a vehicle 100 according to an embodiment of the present disclosure may include a battery 205 configured to supply power, a motor driving device 200 configured to receive power from the battery 205, a motor 250 that is driven and rotated by the motor driving device 200, a front wheel 150 and a rear wheel 155 that are rotated by the motor 250, a front wheel suspension device 160 and a rear wheel suspension device 165 that suppress vibration of a road surface from being transmitted to a vehicle body, and a tilt angle detector 190 configured to detect a tilt angle of the vehicle body. Meanwhile, the vehicle 100 may further include a driving gear (not shown) configured to vary a rotational speed of the motor 250 based on a gear ratio.

The tilt angle detector 190 detects a tilt angle of the vehicle body, and the detected tilt angle is input to an electronic controller 410 described later. The tilt angle detector 190 may be implemented as a gyro sensor, a horizontal gauge sensor, or the like.

Meanwhile, in the drawing, it is illustrated that the tilt angle detector 190 is disposed on the battery 205, but the present disclosure is not limited thereto. The tilt angle detector 190 may be disposed at the front wheel 150, the rear wheel 155, or both of the front wheel 150 and the rear wheel 155.

The battery 205 supplies power to the motor driving device 200. In particular, the battery 205 supplies direct current (DC) power to a capacitor C in the motor driving device 200.

This battery 205 may be formed of a set of a plurality of unit cells. The plurality of unit cells may be managed by a battery management system (BMS) to maintain a constant voltage, so that a constant voltage can be output by the BMS.

For example, the BMS may detect a voltage Vbat of the battery 205 and transmit it to an electronic controller (not shown) or an inverter controller 250 in the motor driving device 200. When the battery voltage Vbat falls below a lower limit, the BMS may supply DC power stored in the capacitor C in the motor driving device 200 to the battery. When the battery voltage Vbat rises above an upper limit, the BMS may supply DC power to the capacitor C in the motor driving device 200.

The battery 205 may, preferably, be configured as a secondary battery capable of charging and discharging, but the present disclosure is not limited thereto.

The motor driving device 200 receives DC power from the battery 205 via a power input cable 120. The motor driving device 200 converts the DC power received from the battery 205 into alternating current (AC) power and supplies it to the motor 250. The converted AC power may be three-phase AC power. The motor driving device 200 may supply the three-phase AC power to the motor 250 via a three-phase output cable 125 provided in the motor driving device 200.

Although the motor driving device 200 of FIG. 1 is shown to have the three-phase output cable 125 composed of three cables, three cables may be provided in a single cable.

The motor 250 includes a stator 130 configured to be fixed (stationary) without rotation, and a rotor 135 configured to rotate. The motor 250 is provided with an input cable 140 to receive AC power supplied from the motor driving device 200.

The motor 250 may be, for example, a three-phase motor. When voltage variable/frequency variable AC power of each phase is applied to a coil of the stator of each phase, the rotational speed of the rotor varies based on the applied frequency.

The motor 250 may be implemented in various forms such as an induction motor, a blushless DC (BLDC) motor, a reluctance motor, etc.

Meanwhile, a driving gear (not shown) may be provided at one side of the motor 250. The driving gear converts rotational energy of the motor 250 based on a gear ratio. The rotational energy output from the driving gear is transmitted to the front wheel 150 and/or the rear wheel 155 to allow the vehicle 100 to move.

The front wheel suspension device 160 and the rear wheel suspension device 165 support the front wheel 150 and rear wheel 155, respectively, relative to the vehicle body. The front wheel suspension device 160 and the rear wheel suspension device 165 are supported by a spring or a damping mechanism in a vertical direction, thereby preventing vibration of a road surface from reaching the vehicle body.

A steering device (not shown) may be further provided at the front wheel 150. The steering device is a device for adjusting the direction of the front wheel 150 to move the vehicle 100 in a direction intended by a driver.

Meanwhile, although not shown in the drawing, the vehicle 100 may further include an electronic controller for controlling electronic devices of the vehicle 100. The electronic controller (not shown) controls each of the devices to operate, display, or the like. In addition, the electronic controller may control the BMS described above.

In addition, the electronic controller (not shown) may generate a driving command value according to various driving modes (drive mode, reverse mode, neutral mode, parking mode, etc.) based on a detection signal from a tilt angle detector (not shown) configured to detect a tilt angle of the vehicle 100, a speed detector (not shown) configured to detect the speed of the vehicle 100, a brake detector (not shown) configured to detect the operation of a brake pedal (not shown), and an accelerator detector (not shown) configured to detect the operation of an accelerator pedal (not shown). In this case, the driving command value may be, for example, a torque command value or a torque command value.

Meanwhile, the vehicle 100 according to an embodiment of the present disclosure may include a hybrid electric vehicle using a battery and a motor while using an engine, as well as a pure electric vehicle using a battery and a motor.

Here, the hybrid electric vehicle may further include a switching means capable of selecting at least one of the battery and the engine, and a transmission.

Meanwhile, the hybrid electric vehicle may be divided into a series type in which a motor is driven by converting mechanical energy output from an engine into electrical energy, a parallel type in which mechanical energy output from an engine and electrical energy from a battery are simultaneously used, and a series-parallel type that is a combination of the series type and the parallel type.

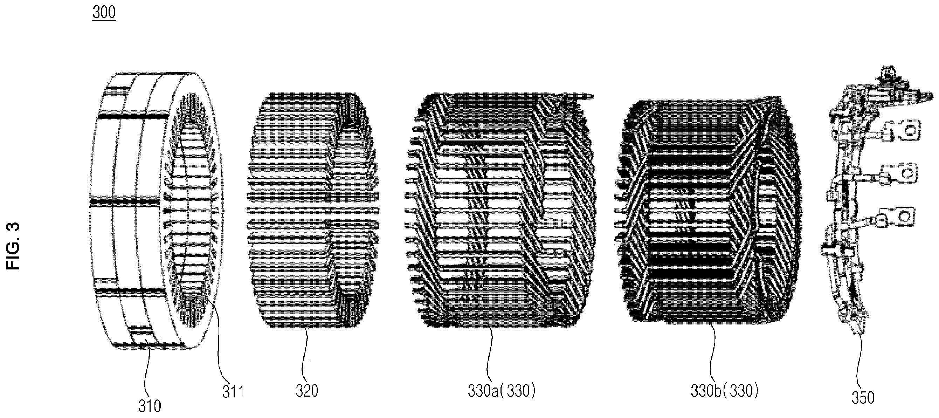

FIG. 2 is an assembled view of a stator according to an embodiment of the present disclosure, and FIG. 3 is an exploded perspective view of a stator according to an embodiment of the present disclosure.

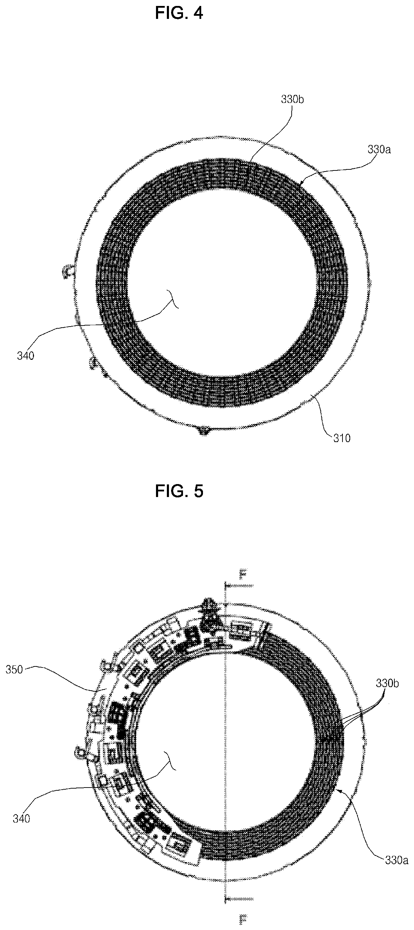

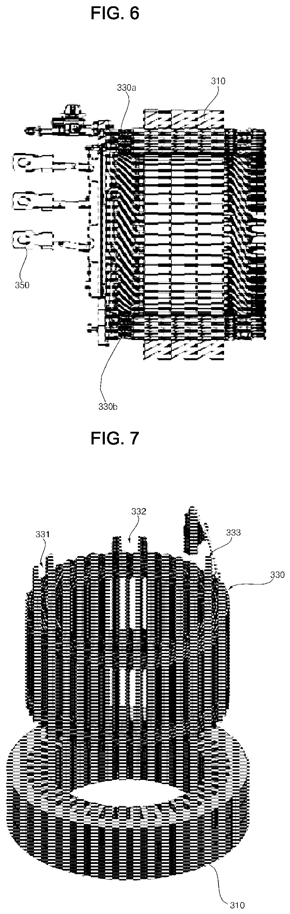

FIG. 4 is a bottom view of a stator according to an embodiment of the present disclosure, FIG. 5 is a top view of a stator according to an embodiment of the present disclosure, and FIG. 6 is a sectional view taken along line F-F of FIG. 5.

Referring to FIGS. 2 to 6, a stator 300 includes a core 310 having a plurality of slots 311, and a plurality of coils 330 wound on the plurality of slots 311.

The core 310, which serves as a path through which magnetic flux passes, may generally be configured by stacking thin electrical steel sheets.

The core 310 may be provided with the plurality of slots 311 arranged in a circumferential direction. The stator 300 may be configured to rotatably receive a rotor (not shown) therein with a predetermined air gap.

A hole 340 may be formed through a central portion of the core 310 along an axial direction. The hole 340 may be a rotor receiving hole to rotatably receive the rotor. The slot 311 may be disposed on an outer circumference of the hole 340. The plurality of slots 311 may be formed on a circumference of the hole 340 in an alternating manner.

In a two-parallel winding structure in which power is applied to an outer side, a power supply line may be connected to the coil 330 of an outer layer that is located farthest from the hole 340. In a parallel winding structure in which power is applied to each of inner/outer sides, a power supply line may be connected to the coil 330 of an outer layer that is located farthest from the hole 340 and the coil 330 of an inner layer that is located closest to the hole 340.

The coil 330 may be wound via the plurality of slots 311. The coil 330 may include a plurality of hairpins inserted into the plurality of slots 311. The plurality of hairpins may be connected in series with each other.

The coil 330 (the plurality of hairpins) may be configured to allow a high voltage to flow therethrough. Each of the plurality of hairpins may include a conductor and a coating material (coating film) coated (applied) on the surface of the conductor. The hairpin may include two insertion portions inserted into the slot 311 in an axial direction from one side of the core 310, and a connecting portion to connect the two insertion portions. The hairpin may be formed by bending a conductor having a rectangular cross-section into a substantially "U" shape.

The insertion portions of the plurality of hairpins are accommodated in the plurality of slots 311, respectively. The slot 311, for example, may have a width corresponding to a cross-sectional shape of the hairpin 210. The slot 311 may be configured to have a width that corresponds to a circumferential width of the cross-section of the hairpin 210. The insertion portions of the plurality of hairpins may form a plurality of layers in the plurality of slots 311.

The coil 330 may include a plurality of phase coils (a U-phase coil, a V-phase coil, and a W-phase coil). The plurality of phase coils may include a plurality of coils connected in parallel to each other. For example, the plurality of phase coils may include two U-phase coils U1 and U2, two V-phase coils V1 and V2, and two W-phase coils W1 and W2.

A power connection terminal of a connection ring 350 may be connected to each of the plurality of phase coils so that power is supplied. The connection ring 350 is a structure consisting of a conductor that connects power supplied from the outside to the coil 330 and connects neutral points of three phases.

Meanwhile, an insulator 320 may be disposed between the core 310 and the coil 330 to ensure insulation. For example, the insulator 320 may be formed of aramid paper, a combination of aramid and plastic film, plastic film, etc.

Among the plurality of coils 330, at least two coils 330a and 330b have at least one different specification.

The plurality of coils 330 may include a first coil 330a and a second coil 330b. The first coil 330a and the second coil 330b may each include a plurality of hairpins.

The first coil 330a may be a wire that has a relatively low dielectric constant that satisfies insulation performance for the supplied voltage, has an anti-corona coating layer, or is extruded from Polyetheretherketone (PEEK).

The second coil 330b may be a wire with a relatively higher dielectric constant than the first coil 330a or an anti-corona coating layer removed.

Among the coils 330, the first coil 330a is a coil with a relatively high specification and therefore may be referred to as a high class wire. Among the coils 330, the second coil 330b is a coil with a relatively low specification and therefore may be referred to as a low class wire.

The first coil 330a may be connected to a power supply line through which power is supplied to the coil 330, and the second coil 330b may be connected to the first coil 330a. Accordingly, current flows in the order of the first coil 330a and the second coil 330b.

Conventionally, a motor coil specification is selected to satisfy the heat resistance class and insulation performance, and the selected specification is applied equally to all coils.

An increase in applied voltage is necessary in order to achieve a lightweight and high-efficiency motor. The increase in applied voltage requires enhanced insulation performance, which leads to an increase in thickness of a coating material of the coil 330, and an increase in manufacturing costs and the proportion of processing costs in the total price along with the advancement in specification.

The voltage distribution in motor coils is concentrated around a power supply line. A voltage drop occurs in windings, and the voltage is highest initially but gradually decreases as the number of turns increases. Therefore, when the insulation of an adjacent part or area of the power supply line is secured, it is possible to meet the insulation performance required for a motor.

The first coil 330a, which is first connected to a power supply line, may have a lower dielectric constant than the second coil 330b.

The first coil 330a may include an anti-corona coating layer, whereas the second coil 330b may not include an anti-corona coating layer. Alternatively, both the first coil 330a and the second coil 330b may include an anti-corona coating layer, and the anti-corona coating layer of the first coil 330a may be thicker than the anti-corona coating layer of the second coil 330b.

In a high voltage environment, when the anti-corona coating layer is absent or insufficient, partial discharge may occur due to the Corona phenomenon, where the electric field is concentrated in a vulnerable area. Therefore, the first coil 330a may be used for the coil 330 that is close to a power supply line to which a high voltage is applied, and the second coil 330b may be used for the coil 330 that is far from the power supply line and has a reduced voltage.

The first coil 330a may have a lower dielectric constant than the second coil 330b and may include an anti-corona coating layer. The first coil 330a may have a lower dielectric constant or a thicker film layer compared to the second coil 330b at the same winding thickness.

The first coil 330a may be a wire made of a thicker polyetheretherketone (PEEK) material than the second coil 330b. PEEK has the advantage of maintaining stable electrical properties at high temperatures.

Additionally, PEEK is suitable for injection molding or extrusion molding and is advantageous in terms of production process. The first coil 330a may be a wire to which a PEEK extrusion specification is applied, and the second coil 330b may be a wire to which a PEEK extrusion specification is not applied.

According to an embodiment of the present disclosure, the first coil 330a with advanced (or high-performance) insulation measures is applied to a layer adjacent to a power supply line, which is a major vulnerable part in the insulation performance, and the second coil 330b with a somewhat lower specification is applied to other layers.

Conventionally, one type (specification) is used for motor windings. However, in the present disclosure, a plurality of types may be used for motor windings. By applying different types of coils, it is possible to satisfy insulation performance equivalent to or higher than that of the conventional technology. Also, winding processing costs can be reduced compared to the conventional technology, thereby ensuring price competitiveness of the motor.

In addition, the first coil 330a with a high specification may be applied to a winding close to a power supply unit (power supply terminal and/or power supply line).

A winding with a low dielectric constant, an anti-corona coated winding, and a PEEK extruded winding may be applied to the winding close to the power supply unit.

By employing the high-specification first coil 330a in a layer adjacent to the power supply unit (power supply terminal and/or power supply line), it is possible to reduce material and processing costs while satisfying the same heat resistance class, insulation performance, etc.

Further, the plurality of coils 330 may have a higher dielectric constant as they are away from the power supply unit such as a power supply line. In addition, the plurality of coils 330 may have a thicker coating layer as they are close to the power supply unit such as a power supply line. Windings may be arranged so that the dielectric constant gradually increases with an increase in distance from the power supply unit, and windings may be arranged so that the dielectric constant gradually decreases with a decrease in distance from the power supply unit. When the power supply unit is connected to an outer side, windings may be arranged so that the dielectric constant increases from the outer side to the inner side according to the arrangement of the slots 311.

Among the plurality of coils 330, at least two coils 330a and 330b have at least one different specification. For example, the stator 300 may include different types of coils with different coating specifications for insulators of rectangular enameled windings.

The configuration of different types of coils may be arranged differently in consideration of potential distribution. In the arrangement method, a winding with a relatively low dielectric constant, a rectangular enameled winding having an anti-corona layer with resistance to partial discharge, or a thick extruded PEEK winding may be disposed in a hairpin layer adjacent to the power power supply line, and a winding with a relatively high dielectric constant, a winding with an anti-corona layer removed, or a thin extruded PEEK winding may be disposed in other hairpin layers.

Even when the different types of coils are applied, it is possible to ensure insulation performance equivalent to that of the existing hairpin motor using the same type of coils, and to reduce the processing costs of rectangular windings.

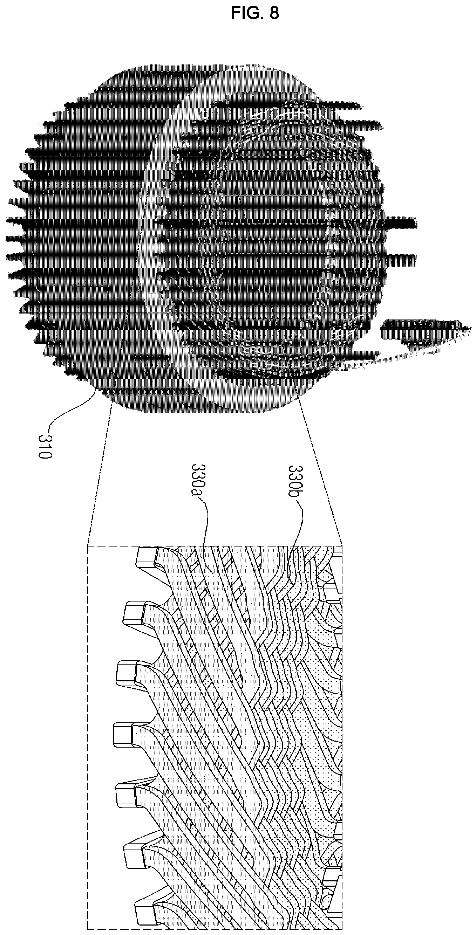

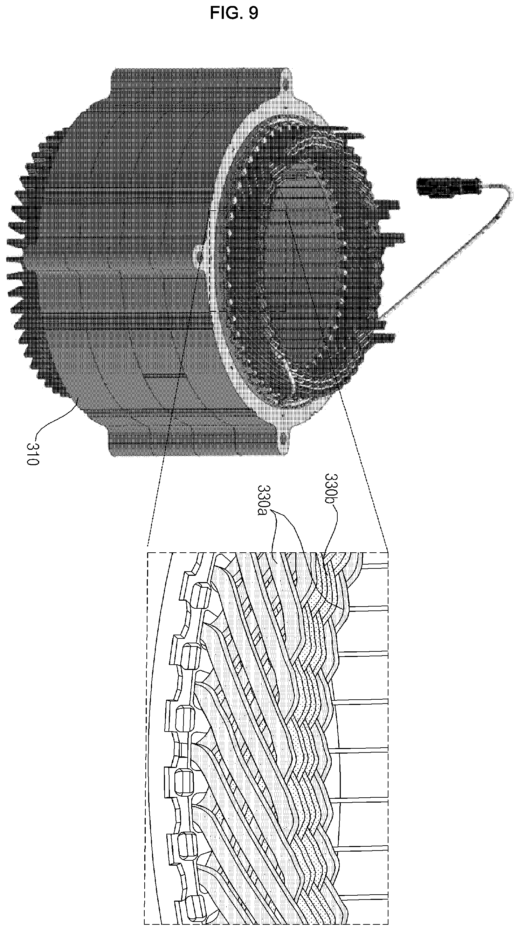

FIG. 7 is a diagram for explaining an example of a winding structure of a hairpin motor. FIG. 8 is a diagram for explaining a winding structure of a hairpin motor according to an embodiment of the present disclosure, illustrating an example of a two-parallel winding structure in which power is applied to an outer side. FIG. 9 is a diagram for explaining a winding structure of a hairpin motor according to an embodiment of the present disclosure, illustrating an example of a parallel winding structure in which power is applied to each of inner/outer sides. FIGS. 8 and 9 each include an enlarged view of hairpins.

Referring to FIG. 7, a motor coil 330 may include three-phase coils 331, 332, and 333, and each of the phase coils 331, 332, and 333 may include an in/out pair for power in and out.

Conventionally, an enamel coating specification that satisfies the required heat resistance class, insulation performance, and the like is selected for the motor coil 330, and the same specification is applied to all coils.

However, according to the present disclosure, in consideration of an insulation vulnerable part (or area) in the motor coil 300, a high-specification winding may be used, and a relatively low-specification winding may be used for the remaining part. When analyzing the potential distribution, a layer adjacent to a power supply line is an insulation vulnerable part, and thus, a winding with enamel coating/PEEK extrusion specifications for satisfying insulation performance is applied to the layer adjacent to the power supply line, and a winding with an enamel coating specification of relatively low insulation performance is applied to other layers.

FIG. 8 illustrates a two-parallel winding structure in which power is applied to an outer side, so that a power supply line may be connected to the first coil 330a of an outer layer that is located farthest from the hole 340.

The first coil 330a is applied to an outer layer, and the second coil 330b is applied to an inner layer. The first coil 330a, which is a winding with a coating specification that satisfies insulation performance, may have a relatively low dielectric constant or a layer with partial discharge resistance. The second coil 330b may have a relatively high dielectric constant or no layer with partial discharge resistance.

FIG. 9 illustrates a parallel winding structure in which power is applied to each of inner/outer sides, so that a power supply line may be connected to the first coil 330a of an outer layer that is located farthest from the hole 340 and the first coil 330a of an inner layer that is located closest to the hole 340.

The first coil 330a is applied to the inner layer to which power is applied and the outer layer to which power is applied, and the second coil 330b is applied between the first coils 330a at the inner/outer sides.

In terms of motor assembly, as windings of different types of insulation coating (enamel/PEEK) are applied and arranged for each layer, and thus, each layer may have a different insulation property and dielectric constant.

The plurality of coils 330 may be configured to include a plurality of turns. The coil 330 may consist of first to n-th turns (n is a natural number of 2 or more). Here, the first turn may be connected to the power supply line during the process of winding the coil 330 and may refer to a turn that first passes through the slot 311 from the power supply line, and the second turn may be a turn following the first turn. The coil 330 may include a first turn connected to the power supply line, and second to n-th turns connected to the first turn. The first to n-th turns are connected in series so that current flows sequentially.

A dielectric constant of the first turn may be lower than a dielectric constant of the n-th turn.

According to embodiments, the dielectric constant may be configured to vary gradually. For example, as the number of turns increases from the first turn to the n-th turn, the dielectric constant may increase.

Meanwhile, coils of a predetermined number of turns are grouped, and a group adjacent to the power supply unit may have a higher dielectric constant than other groups. For example, the dielectric constant from first to x-th turns may be lower than the dielectric constant of an (x+1)-th turn to the n-th turn. Here, x may be a natural number greater than 1 and less than n.

Meanwhile, a coating layer thickness of the first turn may be greater than a coating layer thickness of the n-th turn.

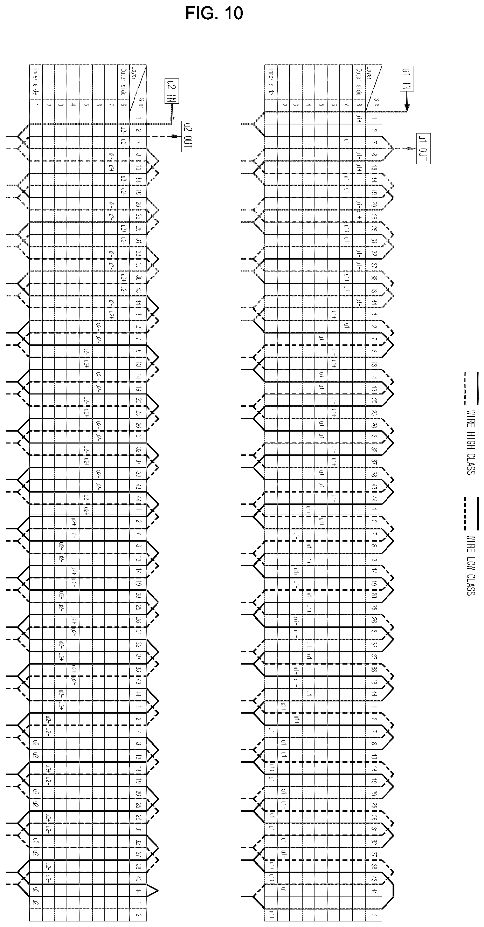

FIG. 10 illustrates a wire connection diagram according to an embodiment of the present disclosure, showing an example of a pattern of a U-phase of a coil.

FIG. 10 illustrates a pattern of a U-phase (U1, U2) in a two-parallel structure with 48 slots.

In FIG. 10, a high class wire may be the first coil 330a with a relatively high specification, and a low class wire may be the second coil 330b with a relatively low specification. In FIG. 10, a dotted line is a return path, and when U+ is defined as a forward direction, U- is a reverse direction opposite to U+. Slots not shown in FIG. 10, such as slots 3, 4, 5, and 6, may be configured in the same manner in patterns of different phases V and W. Twisted windings may be connected by welding.

Referring to FIG. 10, since power is applied to an outer side, a high class wire is disposed in layers 7 and 8 located close to a power supply unit to which power is applied, and a low class wire is disposed in remaining layers, namely, layers 1 to 6.

Power goes into slot 1 and is applied to slot 7. Power goes into slot 7 and goes to slot 13. In the same way, power is sequentially applied to slot 13, slot 19, and slot 25.

A pair of U+ and U- may constitute 1 turn, slot 1-slot 7 may constitute 1 turn, slot 13-slot 19 may constitute 1 turn, slot 25-slot 31 may constitute 1 turn, and slot 37-slot 43 may constitute 1 turn. In the example of FIG. 10, among first to n-th turns, a high class wire is applied to the initial first to fourth turns. Accordingly, high class wires are applied to layers 7 and 8.

At least one layer in the same slot may have a dielectric constant different from that of the remaining layers. According to embodiments, at least one slot in the same layer may have a dielectric constant different from that of the remaining slots.

According to an embodiment of the present disclosure, coating specifications of an insulator of a rectangular enameled winding may be applied differently. In this case, the configuration of different types of coils may be arranged differently in consideration of potential distribution. In the arrangement method, a rectangular enameled winding having a relatively low dielectric constant or an anti-corona layer with resistance to partial discharge may be disposed in a hairpin layer adjacent to a power supply line, and an enameled winding with a relatively high dielectric constant or an anti-corona layer removed may be disposed in other hairpin layers.

A low dielectric constant is effective in preventing electric discharge, and an anti-corona layer is effective in withstanding electric discharge. As the first coil 330a with a high specification is used for a winding adjacent to a power supply unit to which a high voltage is applied, it is possible to secure insulation performance even at a low cost.

It will be apparent that, although the preferred embodiments have been shown and described above, the present disclosure is not limited to the above-described specific embodiments, and various modifications and variations can be made by those skilled in the art without departing from the scope of the present disclosure as defined by the appended claims. Thus, it is intended that the modifications and variations should not be understood independently of the technical idea or perspective of the present disclosure.

## Claims

1. A stator comprising:
a core having a plurality of slots; and
a plurality of coils wound on the plurality of slots,
wherein at least two coils of the plurality of coils have at least one different specification.

2. The stator of claim 1, wherein the plurality of coils comprises:
a first coil connected to a power supply line; and
a second coil connected to the first coil.

3. The stator of claim 2, wherein the first coil has a lower dielectric constant than the second coil.

4. The stator of claim 3, wherein:
the first coil includes an anti-corona coating layer; and
the second coil does not include an anti-corona coating layer.

5. The stator of claim 2, wherein the first coil is made of a thicker polyetheretherketone (PEEK) material than the second coil.

6. The stator of claim 2, wherein:
the first coil is a wire to which a PEEK extrusion specification is applied; and
the second coil is a wire to which a PEEK extrusion specification is not applied.

7. The stator of claim 2, wherein:
the first coil includes an anti-corona coating layer; and
the second coil does not include an anti-corona coating layer.

8. The stator of claim 2, wherein a hole is formed through a central portion of the core along an axial direction,
wherein the slot is disposed on an outer circumference of the hole, and
wherein the power supply line is connected to a coil located farthest from the hole.

9. The stator of claim 2, wherein the power supply line is connected to a coil located farthest from the hole and a coil located closest to the hole.

10. The stator of claim 1, wherein the plurality of coils are configured such that a dielectric constant increases with an increase in distance from a power supply line.

11. The stator of claim 1, wherein the plurality of coils are configured such that a coating layer increases with a decrease in distance from a power supply line.

12. The stator of claim 1, wherein the plurality of coils comprises a first turn connected to a power supply line, and second to n-th turns connected to the first turn.

13. The stator of claim 12, wherein a dielectric constant of the first turn is lower than a dielectric constant of the n-th turn.

14. The stator of claim 12, wherein a dielectric constant increases as a number of turns increases from the first turn to the n-th turn.

15. The stator of claim 12, wherein a dielectric constant of the first turn to an x-th turn is lower than a dielectric constant of an (x+1)-th turn to the n-th turn.

16. The stator of claim 12, wherein a thickness of a coating layer of the first turn is greater than a thickness of a coating layer of the n-th turn.

17. A motor comprising the stator according to any one of claims 1 to 16.
